(19) Europäisches Patentamt
European Patent Office
Office européen des brevets

(11) **EP 1 563 017 B1**

(12) **EUROPEAN PATENT SPECIFICATION**

(45) Date of publication and mention
of the grant of the patent:
**31.12.2008 Bulletin 2009/01**

(21) Application number: **03810413.9**

(22) Date of filing: **29.10.2003**

(51) Int Cl.:
*C09D 5/03* (2006.01)    *C09D 133/14* (2006.01)
*C09D 167/02* (2006.01)    *C09D 133/06* (2006.01)

(86) International application number:
**PCT/EP2003/011972**

(87) International publication number:
**WO 2004/041943 (21.05.2004 Gazette 2004/21)**

(54) **POWDER COATING COMPOSITIONS**

PULVERLACKE

COMPOSITIONS DE REVETEMENT EN POUDRE

(84) Designated Contracting States:
**AT BE BG CH CY CZ DE DK EE ES FI FR GB GR
HU IE IT LI LU MC NL PT RO SE SI SK TR**

(30) Priority: **07.11.2002 EP 02024806**

(43) Date of publication of application:
**17.08.2005 Bulletin 2005/33**

(73) Proprietor: **CYTEC SURFACE SPECIALTIES, S.A.
1070 Bruxelles (BE)**

(72) Inventors:
• **MOENS, Luc**
**B-1640 St.Genesius-Rode (BE)**
• **KNOOPS, Nele**
**B-3020 Herent (BE)**
• **VAN MUYLDER, Marc**
**B-9500 Oudenaarde (BE)**
• **MAETENS, Daniel**
**B-1082 Bruxelles (BE)**

(74) Representative: **Destryker, Elise Martine et al
CYTEC Surface Specialties, S.A.
IPD
Allée de la Recherche, 60
1070 Bruxelles (BE)**

(56) References cited:
**EP-A- 1 184 431**

• **DATABASE WPI Section Ch, Week 198305
Derwent Publications Ltd., London, GB; Class
A14, AN 1983-10593K XP002239102 & JP 57
205458 A (DAINIPPON INK & CHEM KK) 16
December 1982 (1982-12-16) cited in the
application**
• **PATENT ABSTRACTS OF JAPAN vol. 1997, no.
12, 25 December 1997 (1997-12-25) & JP 09 221612
A (KANSAI PAINT CO LTD), 26 August 1997
(1997-08-26)**

**Description**

The present invention relates to powdered thermosetting coating compositions comprising a co-reactable mixture of a glycidyl group containing acrylic copolymer, a carboxylic acid group containing acrylic copolymer, a carboxylic acid group containing polyester and a thermosetting catalyst. These thermosetting powder coatings particularly are designed for coating heat-sensitive substrates such as wood, fibreboard and other materials, which can not withstand the excessive heat/time conditions necessary to cure traditional coatings. The powder coatings accordingly the present invention produce a finish which exhibits reduced gloss, in the range of low to medium, along with an outstanding surface aspect, hardness and weatherability.

Powder coatings which are dry, finely divided, free flowing, solid materials at room temperature, have gained popularity in recent years over liquid coatings. Despite their many advantages, nowadays thermosetting powder coatings generally are cured at temperatures of at least 140°C. Below this recommended temperature the coatings have poor appearance, as well as poor physical and chemical properties. In consequence of this restriction powder coatings are generally not employed in coating heat-sensitive substrates. Recently there has been a good deal of effort in finding powder coatings for heat-sensitive substrates such as wood, fibreboards and plastic. A significant potential for powder coating is wooden and fibreboard cabinet doors such as those commonly used in kitchens and bathrooms. The coating for this application must be both extremely durable because of heavy usage and weatherable because these surfaces are exposed to UV light which tends to cause the finish to yellow. Further for aesthetic purposes a reduced gloss (60° gloss in the range of 5 to 50 according to ASTM D523) finish is highly desired. Compositions that are today useful for heat-sensitive substrates and which provide a low gloss finish, are generally based on Bisphenol A epoxies. However these compositions do not provide the UV stability that is required for certain applications, such as for example kitchen cabinets having a white surface finish. Over time, with exposure to sunlight, the surface finishes made from Bisphenol A epoxies will fade or yellow out. Accordingly, it is an object of the present invention to provide a low temperature curable powder coating which, upon application and curing, provides smooth finishes exhibiting a reduced gloss and a resistance to weathering.

Powder coating compositions comprising a glycidyl group containing acrylic copolymer and a carboxylic acid group containing acrylic copolymer and/or a carboxylic acid group containing polyester, and which are intended, upon application on metal and heat-sensitive substrates and curing at conventional or low temperatures, for high gloss and reduced gloss coatings, already are subject to a certain number of patent(s) (applications).

For example WO 01/92367 claims for powder coating compositions comprising from 10 to 90% weight of a carboxylic acid group containing acrylic copolymer and from 90 to 10% weight of a polyepoxy resin and a catalyst. Any type of polyepoxy resin can be used as such or in a mixture with other crystalline or non-crystalline polyepoxy resins. The powder coating compositions are intended for application on heat-sensitive substrates producing finishes characterised by high hardness and a controllable gloss. Carboxyl functional polyesters optionally can be added to the formulation as a flexibilising agent in amounts up to 50% yet nowhere are specified or illustrated.

EP 504,732 claims for powder coating compositions comprising a carboxylic acid group containing compound and/or resin, an epoxy group containing compound and/or resin as well as a curing catalyst for low temperature curing applications. The carboxylic acid group containing compound is a carboxylic acid group containing polyester or a carboxylic acid group containing acrylic copolymer. High gloss coatings with good solvent resistance are obtained after a 15 minute baking time at 160°C.

US 6,294,610 claims for a binder composition for powder coatings, comprising an epoxy resin, a carboxylic acid functional polymer and a particular catalyst. The carboxylic acid functional polymer can be a carboxylic acid functional polyester or a carboxylic acid group containing acrylic copolymer. When low temperature cure applications are considered, the epoxy resin having an epoxy equivalent weight between 200 and 1000 preferably is an acrylic copolymer with a weight average molecular weight between 200 and 2000. The plate melt flow and gel times at 150°C are compared for powders containing the catalyst according to the invention, with those obtained from powders conventionally catalysed. Powders are cured at temperatures ranging from 150 to 175°C for 5 minutes. Smooth low gloss finishes are obtained for powders where the carboxylic acid containing compound comprises 8% weight of a crystalline polycarboxylic acid such as sebacic acid.

US 6,407,181 claims for powder coating compositions comprising a glycidyl group containing component and a carboxylic acid group containing component. The glycidyl group containing component comprises at least one glycidyl group containing acrylic copolymer with an epoxy equivalent weight of from 250 to 450 optionally in combination with a glycidyl group containing acrylic copolymer with an epoxy equivalent weight of from 500 to 800 and/or a crystalline aromatic epoxy. The carboxylic acid group containing component is a carboxylic acid group containing polyester with an acid number of from 30 to 60 mg KOH/g, optionally in combination with a crystalline polycarboxylic acid or anhydride and/or a carboxylic acid group containing acrylic copolymer with an acid number of from 100 to 400 mg KOH/g. The powders are intended for smooth weatherable, reduced gloss coatings on heat-sensitive substrates. From all the examples as reproduced in table 1 it appears that powder coating compositions comprising a glycidyl group containing acrylic copolymer, an acid group containing polyester, and optionally a carboxylic acid group containing acrylic copolymer, upon curing at an oven set temperature between 350 to 425°C for 5 minutes, all present finishes with reduced gloss and a moderate to heavy orange peel.

JP 57-205458 claims a powder paint which comprises as a binder a co-reactable mixture of 60 to 96% weight of a carboxylic acid group containing polyester with an acid number of from 20 to 200 mg KOH/g, 5 to 40% weight of a glycidyl group containing acrylic copolymer with a number average molecular weight of from 300 to 5000 and 1 to 20% weight of a carboxylic acid group containing acrylic copolymer having an acid number of from 10 to 200 mg KOH/g and a number average molecular weight of from 300 to 10000. The powder compositions which are free of catalysing compound for the reaction "carboxylic acid-epoxy", are intended for smooth high gloss finishes which are obtained after conventional curing cycles such as e.g. 20 minutes at 180°C.

All these powder coating compositions, as cited above, either are developed for conventional curing schedules or, at low curing temperatures, present drawbacks or limitations when a combination of performances such as a smooth aspect along with a good surface hardness and weatherability are desired.

It now has been surprisingly found that powder coating compositions derived from a binder comprising a particular correctable mixture of a carboxylic acid group containing polyester, a carboxylic acid group containing acrylic copolymer and a glycidyl group containing acrylic copolymer, along with an appropriate amount of catalysing compound allows, upon application and curing at temperatures of from 80 to 150°centigrade, for very smooth, reduced gloss finishes, proving good solvent resistance, hardness and weatherability, provided that at least one of the glycidyl group containing acrylic copolymer, the carboxylic acid group containing acrylic copolymer and the carboxylic acid group containing polyester is a low glass transition temperature polymer.

The present invention therefore relates to a thermosetting powder coating composition comprising a co-reactable blend of

(i) 5 to 50 weight percent of at least one of glycidyl group containing acrylic copolymer chosen between glycidyl group containing acrylic copolymers (A) having a glass transition temperature in the range of from +45 to +100°C and a number average molecular weight in the range of from 2000 to 5000, glycidyl group containing acrylic copolymers (A') having a glass transition temperature in the range of from -50 to +40°C, and their mixtures;

(ii) 5 to 90 weight percent of at least one carboxylic acid group containing polyester chosen between carboxylic acid group containing polyesters (B) having an acid number in the range of from 15 to 100 mg KOH/g and a glass transition temperature in the range of from +45 to +100°C, carboxylic acid group containing polyesters (B') having an acid number in the range of from 15 to 100 mg KOH/g and a glass transition temperature of from -50 to +40°C, and their mixtures;

(iii) 5 to 50 weight percent of at least one carboxylic acid group containing acrylic copolymer chosen between carboxylic acid group containing acrylic copolymers (C) having a glass transition temperature in the range of from +45 to +100°C, an acid number of from 10 to 90 mg KOH/g and a number average molecular weight in the range of from 2000 to 5000, carboxylic acid group containing acrylic copolymers (C') having a glass transition temperature in the range of from -50 to +40°C, an acid number of from 10 to 90 mg KOH/g, and their mixtures; the weight percentages being calculated on the whole of the components (A), (A'), (B), (B'), (C) and (C'); and

(iv) a thermosetting catalyst (D)

provided that at least one of the low glass transition temperature polymers (A'), (B') and (C') is present in the composition.

By low or reduced gloss, it is intended that the gloss measured at an angle of 60° according to ASTM D 523, is inferior to 50%.

In the present invention the glass transition temperature is this measured by Differential Scanning Calorimetry according to ASTM D3418 with a heating gradient of 20°C per minute.

In the present invention, the number average molecular weight is measured by gel permeation chromatography (GPC).

The glycidyl group containing acrylic copolymer (A') having a glass transition temperature in the range of from -50 to +40°C used in the composition according to the present invention preferably has a number average molecular weight in the range of from 10000 to 20000.

The carboxylic acid group containing acrylic copolymer (C') having a glass transition temperature in the range of from -50 to +40°C, an acid number of from 10 to 90 mg KOH/g preferably has a number average molecular weight in the range of from 10000 to 20000.

The glycidyl group containing acrylic copolymers (A) and (A') used in the present invention preferably have an epoxy equivalent weight of 1.0 to 10.0 and more preferably 1.5 to 5.0 milli-equivalents of epoxy/gram of polymer.

The glycidyl group containing acrylic copolymers (A) and (A') used in the composition according to the present invention are preferably obtained from 1 to 95 mole % of at least one glycidyl group containing (meth)acrylic monomer, preferably selected from glycidyl acrylate, glycidyl methacrylate, methyl glycidyl methacrylate, methyl glycidyl acrylate, 3,4-epoxycyclohexylmethyl(meth)acrylate, 1,2-ethyleneglycol glycidylether(meth)acrylate, 1,3-propyleneglycolglycidylether(meth)acrylate, 1,4-butyleneglycolether(meth)acrylate, 1,6-hexanediolether(meth)acrylate, 1,3-(2-ethyl-2-butyl)-propanediolglycidylether(meth)acrylate and acrylic glycidyl ether.

The other monomers copolymerisable with the glycidyl group containing monomer are used in mole percentages ranging from 5 to 99 and are preferably selected from methyl(meth)acrylate, ethyl(meth)acrylate, propyl(meth)acrylate, n-butyl(meth)acrylate, isobutyl(meth)acrylate, tert.butyl(meth)acrylate, 2-ethylhexyl(meth)acrylate, stearyl(meth)acrylate, tridecyl(meth)acrylate, cyclohexyl(meth)acrylate, n-hexyl(meth)acrylate, benzyl(meth)acrylate, phenyl(meth) acrylate, isobornyl(meth)acrylate, nonyl(meth)acrylate, hydroxyethyl(meth)acrylate, hydroxypropyl(meth)acrylate, hydroxybutyl(meth)acrylate, 1,4-butandiol mono(meth)acrylate, the esters of methacrylic acid, maleic acid, maleic anhydride, itaconic acid, dimethylaminoethyl(meth)acrylate, diethylaminoethyl(meth)acrylate, styrene, $\alpha$-methylstyrene, vinyltoluene, (meth)acrylonitrile, vinylacetate, vinylpropionate, acrylamide, methacrylamide, methylol (meth)acrylamide, vinylchloride, ethylene, propylene, C4-20 olefins and $\alpha$-olefins. They can be used by themselves or in combination of two or more.

The carboxylic acid group containing acrylic copolymers (C) and (C') of the present invention have an acid number of from 10 to 90 mg KOH/g and preferably of from 25 to 70 mg KOH/g.

The carboxylic acid group containing copolymers (C) and (C') are preferably obtained from 1 to 95 mole % of at least one carboxylic acid group containing monomer selected from acrylic acid, methacrylic acid, crotonic acid, itaconic acid, fumaric acid, maleic acid, citraconic acid, the monoalkylesters of unsaturated dicarboxylic acids. They can be used by themselves or in combination of two or more.

The other monomers copolymerisable with the carboxylic acid group containing monomer are used in mole percentages ranging from 5 to 99 and are preferably selected from methyl(meth)acrylate, ethyl(meth)acrylate, propyl (meth)acrylate, n-butyl(meth)acrylate, isobutyl(meth)acrylate, tert. butyl(meth)acrylate, 2-ethylhexyl(meth)acrylate, stearyl(meth)acrylate, tridecyl(meth)acrylate, cyclohexyl(meth)acrylate, n-hexyl(meth)acrylate, benzyl(meth)acrylate, phenyl(meth) acrylate, isobornyl(meth)acrylate, nonyl(meth)acrylate, hydroxyethyl(meth)acrylate, hydroxypropyl(meth) acrylate, hydroxybutyl(meth)acrylate, 1,4-butandiol mono(meth)acrylate, the esters of methacrylic acid, maleic acid, maleic anhydride, itaconic acid, dimethylaminoethyl (meth)acrylate, diethylaminoethyl(meth)acrylate, styrene, $\alpha$-methylstyrene, vinyltoluene, (meth)acrylonitrile, vinylacetate, vinylpropionate, acrylamide, methacrylamide, methylol (meth) acrylamide, vinylchloride, ethylene, propylene, C4-20 olefins and $\alpha$-olefins . They can be used by themselves or in combination of two or more.

According to one embodiment of the present invention, the glycidyl group containing acrylic copolymer (A) or the carboxylic acid group containing acrylic copolymer (C) can be used either alone.

According to another embodiment of the present invention, a blend of a high glass transition copolymer (A), respectively (C), and a low glass transition acrylic copolymer (A'), respectively (C'), is used. When used as a blend, the glycidyl group containing acrylic copolymer or the carboxylic acid group containing acrylic copolymer, or both, are preferably composed of:

- 50 to 95 parts by weight of an acrylic copolymer (A), respectively (C), having a glass transition temperature in the range of from +45 to +100°C, and
- 5 to 50 parts by weight of an acrylic copolymer (A'), respectively (C'), having a glass transition temperature in the range of from -50 to +40°C.

As it is well known for those skilled in the art, a high Tg is obtainable depending on the proper choice of monomers. For example, most of the methacrylates give copolymers with high Tg, while most of the acrylates give copolymers of low Tg. Mixtures of both types give any desirable Tg.

The glycidyl group containing acrylic copolymer as well as the carboxylic acid group containing copolymer is generally prepared by conventional polymerisation techniques, either in mass, in emulsion, or in the solution of an organic solvent. The nature of the solvent is very little of importance, provided that it is inert and that it readily dissolves the monomers and the synthesised copolymer. Suitable solvents include toluene, ethyl acetate, butyl acetate, xylene. The monomers are usually copolymerised in the presence of a free radical polymerisation initiator (e.g. benzoyl peroxide, dibutyl peroxide, azo-bis-isobutyronitrile) in an amount representing 0.1 to 4.0% by weight of the monomers.

To achieve a good control of the molecular weight and its distribution, a chain transfer agent, preferably of the mercaptan type, such as n-dodecylmercaptan, t-dodecanethiol, iso-octylmercaptan, or of the carbon halide type, such as carbon tetrabromide, bromotrichloromethane, can also added in the course of the reaction. The chain transfer agent is usually used in amounts of up to 10% by weight of the monomers used in the copolymerisation.

A cylindrical, double walled reactor equipped with a stirrer, a condenser, an inert gas (nitrogen, for example) inlet and outlet, and metering pump feeding systems is generally used to prepare the glycidyl group containing acrylic copolymer. Polymerisation is carried out under conventional conditions. Thus, when polymerisation is carried out in solution, for example, an organic solvent is first introduced into the reactor and heated to the refluxing temperature under an inert gas atmosphere (e.g. nitrogen, carbon dioxide), and a homogeneous mixture of the required monomers, the free radical polymerisation initiator and the chain transfer agent, when needed, is then added to the solvent gradually over several hours. The reaction mixture is then maintained at the indicated temperature for certain hours, while stirring. The solvent is then removed from the copolymer obtained *in vacuo*.

The carboxyl functional polyesters of the present invention have an acid number from 15 to 100 mg KOH/g and preferably from 30 to 70 mg KOH/g.

According to one embodiment of the present invention, the carboxyl functional polyester (B) is used alone. According to another embodiment of the invention, the carboxyl functional polyester (B) is used in combination with a low Tg polyester (B'). The carboxyl functional polyester (B) is preferably an amorphous polyester.

The carboxyl functional polyester (B') is preferably a semi-crystalline polyester.

When a blend is used, the weight ratio between the amorphous polyester (B) and the semi-crystalline polyester (B') preferably ranges from 95:5 to 50:50.

The carboxyl functional polyesters (B) preferably used in the composition according to the invention have:

-    an number averaged molecular weight ranging from 1100 to 15000 and more preferably from 1600 to 8500,

-    an ICI cone and plate viscosity according to ASTM D4287-88, measured at 200°C ranging from 5 to 15000 mPa.s.

The carboxyl functional polyester (B) is usually obtained from an acid constituent and a polyol constituent. The acid constituent is preferably composed of from 50 to 100 molar percent of terephthalic or isophthalic acid or their mixtures and from 0 to 50 molar percent of another polyacid constituent selected from one or more aliphatic, cycloaliphatic or aromatic polyacids, such as: fumaric acid, maleic acid, phthalic anhydride, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, trimellitic acid or pyromellitic acid, or the corresponding anhydrides.

The polyol constituent of the polyester (B), used in the composition according to the present invention, is preferably composed of from 40 to 100 molar percent of neopentyl glycol and from 0 to 60 molar percent of another polyol constituent selected from one or more aliphatic or cycloaliphatic polyols such as: ethylene glycol, propylene glycol, 1,4-butanediol, 1,6-hexanediol, 1,4-cyclohexanediol, 1,4-cyclohexanedimethanol, 2-methyl-1,3-propanediol, 2-butyl-2-ethyl-1,3-propanediol, hydrogenated Bisphenol A, hydroxypivalate of neopentyl glycol, trimethylolpropane, ditrimethylolpropane, pentaerythritol.

The carboxyl functional polyesters (B') used in the composition according to the present invention have a carboxyl number from 15 to 100 mg KOH/g and preferably from 30 to 70 mg KOH/g

The carboxyl functional polyesters (B') are further preferably characterised by:

-    a number averaged molecular weight ranging from 1100 to 17000 and more preferably from 1400 to 11200

-    a fusion zone from 50 to 150°C, measured by Differential Scanning Calorimetry (DSC) according to ASTM D3418 with a heating gradient of 20°C per minute

-    a glass transition temperature (Tg) of below 40°C

-    a degree of crystallinity, measured by Differential Scanning Calorimetry (DSC) according to ASTM D3415 of at least 5 J/g and more preferably at least 10 J/g

-    an ICI (cone/plate) viscosity according to ASTM D4287-88, measured at 100°C of at least 100 mPa.s.

The polyester (B') used in the composition according to the present invention, is usually obtained from an acid constituent and a polyol constituent. The acid constituent is preferably composed of from 70 to 100 molar percent of terephthalic acid, 1,4-cyclohexanedicarboxylic acid and/or a linear chain dicarboxylic acid containing from 4 to 16 carbon atoms such as succinic acid, adipic acid, glutaric acid, pimelic acid, suberic acid, azelaic acid, sebacic acid, 1,10-decanedioic acid, 1,11-undecanedioic acid, 1,12-dodecanedioic acid, 1,13-triadecanedioic acid, 1,14-tetradecanedioic acid, 1,15-pentadecanedioic acid, 1,16-hexadecanedioic acid, used in a mixture or alone, and from 30 to 0 molar percent of at least one other aliphatic, cycloaliphatic or aromatic polyacid such as: fumaric acid, maleic anhydride, phthalic anhydride, isophthalic acid, 1,3-cyclohexanedicarboxylic acid, 1,2-cyclohexanedicarboxylic acid.

The polyol constituent of the polyester (B') is preferably composed of from 70 to 100 molar percent of a cycloaliphatic and/or linear-chain aliphatic diol containing 2 to 16 carbon atoms such as 1,4-cyclohexanediol, 1,4-cyclohexanedimethanol, hydrogenated Bisphenol A, 2,2,4,4-tetramethyl-1,3-cyclobutanol or 4,8-bis(hydroxymethyl)tri-cyclo [5.2.1.0]oecane, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 14-tetradecanediol, 1,16-hexadecanediol, used in a mixture of alone, and from 30 to 0 molar percent of at least one other aliphatic polyol such as: propylene glycol, neopentyl glycol, 2-methyl-1,3-propanediol, 2-butyl-2-ethyl-1,3-propanediol, hydroxypivalate of neopentyl glycol.

The carboxylic acid group containing polyester (B) and the carboxylic acid group containing polyester (B') used in the composition according to the present invention, can be prepared using conventional esterification techniques well known in the art. The polyesters are usually prepared according to a procedure consisting of one or more reaction steps.

The carboxylic acid group containing polyesters also can be obtained from the ring opening reaction of an anhydride of a polybasic organic carboxylic acid on the hydroxyl group of the hydroxyl group containing polyester at a temperature of from 120 to 200°C until the desired acid and/or hydroxyl numbers are obtained.

The thermosetting catalyst (D) used in the composition according to the invention is generally added in order to accelerate cross-linking reactions of the thermosetting powder composition during curing. Preferred examples of such catalysts include amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride) or acid blocked catalysts such as for example acid blocked amine or phosphine catalysts. These catalysts are preferably used in an amount of from 0.1 to 5% with respect to the total weight of (A), (A'), (B), (B'), (C) and (C').

According to a preferred embodiment of the invention, the composition comprises a glycidyl group containing acrylic copolymer (A) having a glass transition temperature in the range of from +45 to +100°C , of a glycidyl group containing acrylic copolymer (A') having a glass transition temperature in the range of from -50 to +40°C, a carboxylic acid group containing amorphous polyester (B) having a glass transition temperature in the range of from +45 to +100°C, of a carboxylic acid group containing acrylic copolymer (C) having a glass transition temperature in the range of from +45 to +100°C, and a thermosetting catalyst (D) selected from the phosphines, amines, phosphonium salt, ammonium salt, acid blocked amine or acid blocked phosphine type compounds.

According to another preferred embodiment of the invention, the composition comprises a glycidyl group containing acrylic copolymer (A) having a glass transition temperature in the range of from +45 to +100°C, a carboxylic acid group containing amorphous polyester (B) having an acid number in the range of from 15 to 100 mg KOH/g and a glass transition temperature in the range of from +45 to +100°C, a carboxylic acid group containing semi-crystalline polyester (B') having an acid number in the range of from 15 to 100 mg KOH/g and a glass transition temperature in the range of from -50 to +40°C, a carboxylic acid group containing acrylic copolymer (C) having a glass transition temperature in the range of from +45 to +100°C, an acid number of from 10 to 90 mg KOH/g and a thermosetting catalyst (D) selected from the phosphines, amines, phosphonium salt, ammonium salt, acid blocked amine or acid blocked phosphine type compounds.

According to yet another preferred embodiment of the present invention, the composition comprises a glycidyl group containing acrylic copolymer (A) having a glass transition temperature in the range of from +45 to +100°C, a carboxylic acid group containing amorphous polyester (B) having an acid number in the range of from 15 to 100 mg KOH/g and a glass transition temperature in the range of from +45 to +100°C, a carboxylic acid group containing acrylic copolymer (C) having a glass transition temperature in the range of from +45 to +100°C, to 5000, a carboxylic acid group containing acrylic copolymer (C') having a glass transition temperature in the range of from -50 to +40°C, and a thermosetting catalyst (D) selected from the phosphines, amines, phosphonium salt, ammonium salt, acid blocked amine or acid blocked phosphine type compounds.

According to another preferred embodiment of the invention, the composition comprises a glycidyl group containing acrylic copolymer (A) having a glass transition temperature in the range of from +45 to +100°C, a glycidyl group containing acrylic copolymer (A') having a glass transition temperature in the range of from -50 to +40°C, of a carboxylic acid group containing amorphous polyester (B) having an acid number in the range of from 15 to 100 mg KOH/g and a glass transition temperature in the range of from +45 to +100°C, a carboxylic acid group containing acrylic copolymer (C) having a glass transition temperature in the range of from +45 to +100°C, a carboxylic acid group containing acrylic copolymer (C') having a glass transition temperature in the range of from -50 to +40°C and a thermosetting catalyst (D) selected from the phosphines, amines, phosphonium salt, ammonium salt, acid blocked amine or acid blocked phosphine type compound.

According to yet another preferred embodiment according to the invention, the composition comprises a glycidyl group containing acrylic copolymer (A) having a glass transition temperature in the range of from +45 to +100°C, of a glycidyl group containing acrylic copolymer (A') having a glass transition temperature in the range of from -50 to +40°C, a carboxylic acid group containing amorphous polyester (B) having an acid number in the range of from 15 to 100 mg KOH/g and a glass transition temperature in the range of from +45 to +100°C, a carboxylic acid group containing semi-crystalline polyester (B') having an acid number in the range of from 15 to 100 mg KOH/g and a glass transition temperature in the range of from -50 to +40°C, a carboxylic acid group containing acrylic copolymer (C) having a glass transition temperature in the range of from +45 to +100°C, and a thermosetting catalyst (D) selected from the phosphines, amines, phosphonium salt, ammonium salt, acid blocked amine or acid blocked phosphine type compounds.

According to yet another preferred embodiment of the invention, the composition comprises a glycidyl group containing acrylic copolymer (A) having a glass transition temperature in the range of from +45 to +100°C, a carboxylic acid group containing amorphous polyester (B) having an acid number in the range of from 15 to 100 mg KOH/g and a glass transition temperature in the range of from +45 to +100°C, a carboxylic acid group containing semi-crystalline polyester (B') having an acid number in the range of from 15 to 100 mg KOH/g and a glass transition temperature in the range of from -50 to +40°C, a carboxylic acid group containing acrylic copolymer (C) having a glass transition temperature in the range of from +45 to +100°C, a carboxylic acid group containing acrylic copolymer (C') having a glass transition temperature in the range of from -50 to +40°C, an acid number of from 10 to 90 mg KOH/g and a number average molecular weight in the range of from 10000 to 20000, and a thermosetting catalyst (D) selected from the phosphines, amines, phosphonium salt, ammonium salt, acid blocked amine or acid blocked phosphine type compound.

Finally, according to another preferred embodiment of the invention, the composition comprises a glycidyl group containing acrylic copolymer (A) having a glass transition temperature in the range of from +45 to +100°C, a glycidyl group containing acrylic copolymer (A') having a glass transition temperature in the range of from -50 to +40°C, a carboxylic acid group containing amorphous polyester (B) having an acid number in the range of from 15 to 100 mg KOH/g and a glass transition temperature in the range of from +45 to +100°C, a carboxylic acid group containing semi-crystalline polyester (B') having an acid number in the range of from 15 to 100 mg KOH/g and a glass transition temperature in the range of from -50 to +40°C, a carboxylic acid group containing acrylic copolymer (C) having a glass transition temperature in the range of from +45 to +100°C, a carboxylic acid group containing acrylic copolymer (C')having a glass transition temperature in the range of from -50 to +40°C, and a thermosetting catalyst (D) selected from the phosphines, amines, phosphonium salt, ammonium salt, acid blocked amine or acid blocked phosphine type compound.

The binder system of the thermosetting composition of the invention is preferably composed in such a way that for each equivalent of carboxyl group present in the carboxylic acid group containing polyester ((B) and/or (B')) and the carboxylic acid group containing acrylic copolymer ((C) and/or (C')), there is between 0.3 and 2.0 and more preferably between 0.6 and 1.7 equivalents of epoxy groups from the glycidyl group containing acrylic copolymer ((A) and/or (A')).

In addition to the essential components described above, compositions within the scope of the present invention can also include flow control agents such as Resiflow P-675 (Estron), Modaflow (Monsanto), Acronal 4F (BASF), and degassing agents such as Benzoin (BASF). To the formulation UV-light absorbers such as Tinuvin 900 (Ciba), hindered amine light stabilisers represented by Tinuvin 144 (Ciba), other stabilising agents such as Tinuvin 312 and 1130 (Ciba), antioxidants such as Irganox 1010 (Ciba) and stabilisers of phosphonite or phosphite types can also be added.

Both pigmented and clear lacquers can be prepared. A variety of dyes and pigments can be utilised in the composition of this invention. Examples of useful pigments and dyes are: metallic oxides such as titanium dioxide, iron oxide and zinc oxide, metal hydroxides, metal powders, sulphides, sulphates, carbonates, silicates such as ammonium silicate, carbon black, talc, china clay, barytes, iron blues, leadblues, organic reds and organic maroons.

The components of the composition according to the invention may be mixed by dry blending in a mixer or blender (e.g. drum mixer). The premix is then homogenised at temperatures ranging from 50 to 120°C in a single screw extruder such as the BUSS-Ko-Kneter or a twin screw extruder such as the PRISM or APV. The extrudate, when cooled down, is ground to a powder with a particle size ranging from 10 to 150 $\mu$m. The powdered composition may be deposited on the substrate by use of a powder gun such as an electrostatic CORONA gun or TRIBO gun. On the other hand, well known methods of powder deposition such as the fluidised bed technique can also be used. After deposition the powder is usually heated to a temperature between 80 and 150°C, causing the particles to flow and fuse together to form a smooth, uniform, continuous, uncratered coating on the substrate surface.

The present invention further relates to the use of the thermosetting powder coating composition according to the invention to coat metallic and non-metallic surfaces, especially heat sensitive substrates such as paper, card board, wood, fibre board, textiles, polycarbonates, poly (meth)acrylates, polyolefins, polystyrenes, polyvinylchlorides, polyesters, polyurethanes, polyamides, copolymers of acrylonitrile butadiene styrene and cellulose acetate butyrate; and to the partially or entirely coated substrates thereby obtained.

The following examples are submitted for a better understanding of the invention without being restricted thereto.

Example 1 & 2: Synthesis of a high Tg-low Mn and of a low Tg-high Mn glycidyl group containing acrylic copolymer

Step 1: Synthesis of the low Tg resin with high molecular weight (A')

261.38 parts of n-butylacetate are brought in a double walled flask of 5 l equipped with a stirrer, a water cooled condenser and an inlet for nitrogen and a thermoprobe attached to a thermoregulator.

The flask content is heated and stirred continuously while nitrogen is purged through the solvent. At a temperature of 92 ± 1°C a mixture of 65.34 parts of n-butylacetate with 0.82 parts of 2,2'-azobis (2-methyl butanenitrile) is fed in the flask during 215 minutes with a peristaltic pump. 5 minutes after the start of this feed, a second one is started with another pump, which is a mixture of M1

This feed takes 180 minutes.

After 315 minutes of total synthesis time, the synthesis temperature is kept constant at 92 ± 1°C (mass temperature measuring) and step 2 is started with.

Step 2: Synthesis of the high Tg resin with low molecular weight (A) in the prepolymer created in step 1

The flask content described in step 1 is continuously being purged with nitrogen.

At the same temperature of 92 ± 1°C a mixture of 81.68 parts of n-butylacetate with 5.17 parts of 2,2'-azobis (2-methyl butanenitrile) is fed in the flask during 215 minutes with a peristaltic pump. 5 minutes after the start of this feed, a second one is started with another pump, which is a mixture of M2

This feed takes 180 minutes.

After 315 minutes of total synthesis time for step 2, the flask content is transversed gradually in a rotary evaporator during a period of 120 minutes. Before the drying cycle the ambient pressure in the rotary evaporator is reduced to 10 hPa. The temperature of the oil, which heats the evaporator flask content, is kept at 180°C during the entire evaporation cycle. After 180 minutes of evaporation, the acrylic resin with absence of solvent is isolated and cooled down to room temperature. A sample is taken for residual solvent content analysis by gas chromatography. The residual solvent content should be lower than 0,3% weight.

|  | Example 1 | Example 2 |
|---|---|---|
| M1 |  |  |
| GMA | 91.48 | 68.61 |
| BuA | 71.88 | 79.67 |
| BuMA |  | 15.7 |
| Tg, °C | -22 | -20 |
| Mn | 11240 | 11000 |
| M2 |  |  |
| GMA | 228.7 | 171.53 |
| MMA | 39.12 | 91.03 |
| BuMA |  | 44.93 |
| Styrene | 140.57 | 100.92 |
| Tg, °C | 57 | 54 |
| Mn | 4450 | 4500 |
| Brookfield viscosity at 200°C, mPa.s | 2000 | 2500 |
| EEW, g/equiv. | 257 | 390 |

The obtained mixtures in both examples 1 and 2 are thus blends of 28,6% by weight of a low Tg glycidyl group containing acrylic copolymer (A') with 71,4% by weight of a high Tg glycidyl group containing acrylic copolymer (A)

In this table the following abbreviations are used:

GMA      glycidyl methacrylate

BuA      butyl acrylate

BuMA      butyl methacrylate

MMA      methyl methacrylate

Tg      glass transition temperature

Mn      number average molecular weight

EEW epoxy equivalent weight

<u>Example 3:</u> Synthesis of a high Tg-low Mn glycidyl group containing acrylic (A)

390.88 parts of n- butylacetate are brought in a double walled flask of 5 l equipped with a stirrer, a water cooled condenser and an inlet for nitrogen and a thermoprobe attached to a thermoregulator.

The flask content is heated and stirred continuously while nitrogen is purged through the solvent. At a temperature of 92 ± 1°C a mixture of 97.72 parts of n-butylacetate with 6.18 parts of 2,2'-azobis (2-methyl butanenitrile) is fed in the flask during 215 minutes with a peristaltic pump. 5 minutes after the start of this feed, a second one is started with another pump and is mixture 273.62 parts of glycidyl methacrylate, 46.81 parts of methyl methacrylate and 168.18 parts of styrene

This feed takes 180 minutes.

After 315 minutes of total synthesis time, the flask content is transversed gradually in a rotary evaporator during a period of 120 minutes. Before the drying cycle the ambient pressure in the rotary evaporator is reduced to 10 hPa.

The temperature of the oil, which heats the evaporator flask content, is kept at 180°C during the entire evaporation cycle. After 180 minutes of evaporation, the acrylic resin with absence of solvent is isolated and cooled down to room temperature. A sample is taken for residual solvent content analysis by gas chromatography. The residual solvent content should be lower than 0.3% weight.

The glycidyl group containing acrylic copolymer, thus obtained, is characterised by an epoxy equivalent weight (EEW) of 260 g/equiv., a number average molecular weight of 4300, a glass transition temperature of 55°C and a Brookfield cone/plate viscosity of 3600 mPa.s measured at 200°C.

<u>Example 4 & 5:</u> Synthesis of a high Tg-low Mn and of a low Tg-high Mn carboxylic acid group containing acrylic copolymer.

Step 1: Synthesis of the low Tg resin with high molecular weight (C')

261.1 parts of n- butylacetate are brought in a double walled flask of 5l equipped with a stirrer, a water cooled condenser and an inlet for nitrogen and a thermoprobe attached to a thermoregulator.

The flask content is heated and stirred continuously while nitrogen is purged through the solvent. At a temperature of 125 ± 1°C a mixture of 65.0 parts of n-butylacetate with 0,81 parts of t-butyl peroxybenzoate is fed in the flask during 215 minutes with a peristaltic pump. 5 minutes after the start of this feed, a second one is started with another pump, which is a mixture of M1

This feed takes 180 minutes.

After 315 minutes of total synthesis time, the synthesis temperature is kept constant at 125 ± 1°C (mass temperature measuring) and step 2 is started with

Step 2: Synthesis of the high Tg resin with low molecular weight (C) in the prepolymer created in step 1.

The flask content described in step 1 is continuously being purged with nitrogen.

At the same temperature of 125 ± 1 °C a mixture of 80.57 parts of n-butylacetate with 12.23 parts of t-butyl peroxybenzoate is fed in the flask during 215 minutes with a peristaltic pump. 5 minutes after the start of this feed, a second one is started with another pump, which is a mixture of M2

This feed takes 180 minutes.

After 315 minutes of total synthesis time for step 2, the flask content is transversed gradually in a rotary evaporator during a period of 120 minutes.

Before the drying cycle the ambient pressure in the rotary evaporator is reduced to 10 hPa. The temperature of the oil, which heats the evaporator flask content, is kept at 180°C during the entire evaporation cycle. After 180 minutes of evaporation, the acrylic resin with absence of solvent is isolated and cooled down to room temperature. A sample is taken for residual solvent content analysis by gas chromatography. The residual solvent content should be lower than 0.3% weight.

|  | Example 4 | Example 5 |
|---|---|---|
| M1 |  |  |
| MA (methacrylic acid) | 8.32 | 13.75 |
| MMA | 10.93 | 5.47 |

(continued)

|  | Example 4 | Example 5 |
|---|---|---|
| M1 | | |
| BuA | 111.26 | 111.03 |
| Styrene | 32.63 | 32.56 |
| Tg, °C | -12 | -10 |
| Mn | 12560 | 11800 |
| M2 | | |
| MA | 20.80 | 34.37 |
| MMA | 142.33 | 128.44 |
| BuMA | 163.13 | 162.80 |
| Styrene | 81.57 | 81.40 |
| Tg, °C | 49 | 52 |
| Mn | 6070 | 5900 |
| Brookfield viscosity at 200°C, mPa.s | 2000 | 2500 |
| Acid number, mg KOH/g | 30.6 | 50.0 |

The obtained mixtures in both examples 4 and 5 are thus blends of 28,6% by weight of a low Tg carboxyl group containing acrylic copolymer (C') with 71,4% by weight of a high Tg carboxyl group containing acrylic copolymer (C).

Example 6 & 7: Synthesis of a high Tg-low Mn carboxylic acid group containing acrylic copolymer (C).

Example 6: 390.16 parts of n-butylacetate are brought in a double walled flask of 5l equipped with a stirrer, a water cooled condenser and an inlet for nitrogen and a thermoprobe attached to a thermoregulator.

The flask content is heated and stirred continuously while nitrogen is purged through the solvent. At a temperature of 125 ± 1°C a mixture of 97.54 parts of n-butylacetate with 14.63 parts of t-butyl peroxybenzoate is fed in the flask during 215 minutes with a peristaltic pump. 5 minutes after the start of this feed, a second one is started with another pump, which is a mixture of 25.09 parts of methacrylic acid, 97.54 parts of styrene, 195.08 parts of butyl methacrylate and 170.21 parts of methyl methacrylate. This feed takes 180 minutes. The carboxylic acid group containing acrylic copolymer is characterised by an acid number of 30.2 mg KOH/g, a number average molecular weight of 4800, a Brookfield cone/plate viscosity, measured at 200°C of 3000 mPa.s and a glass transition temperature of 57°C.

Example 7 (comparative example): 386.54 parts of n-butanol are brought in a double walled flask of 5 1 equipped with a stirrer, a water cooled condenser and an inlet for nitrogen and a thermoprobe attached to a thermoregulator.

The flask content is heated and stirred continuously while nitrogen is purged through the solvent. At a temperature of 118 ± 1°C a mixture of 96.64 parts of n-butanol with 14.50 parts of t-butyl peroxybenzoate is fed in the flask during 215 minutes with a peristaltic pump. 5 minutes after the start of this feed, a second one is started with another pump which is a mixture of 87.89 parts of methacrylic acid, 96.64 parts of styrene, 193.27 parts of butyl methacrylate and 105.21 parts of methyl methacrylate This feed takes 180 minutes. The carboxylic acid group containing acrylic copolymer is characterised by an acid number of 102 mg KOH/g, a number average molecular weight of 5300, a Brookfield cone/plate viscosity, measured at 200°C of 9300 mPa.s and a glass transition temperature of 63°C.

After 315 minutes of total synthesis time, the flask content for example 6 & 7, respectively is transversed gradually in a rotary evaporator during a period of 120 minutes. Before the drying cycle the ambient pressure in the rotary evaporator is reduced to 10 hPa. The temperature of the oil, which heats the evaporator flask content, is kept at 180°C during the entire evaporation cycle. After 180 minutes of evaporation, the acrylic resin with absence of solvent is isolated and cooled down to room temperature. A sample is taken for residual solvent content analysis by gas chromatography. The residual solvent content should be lower than 0.3% weight.

Example 8: Synthesis of a carboxylic acid group containing polyester (B).

422.30 parts of neopentyl glycol is placed in a conventional four neck round bottom flask equipped with a stirrer, a distillation column connected to a water cooled condenser, an inlet for nitrogen and a thermometer attached to a thermoregulator.

The flask contents are heated, while stirring under nitrogen, to a temperature of circa 140°C at which point 573.15 parts of terephthalic acid, 30.17 parts of adipic acid and 1.25 parts of n-butyltintrioctoate are added. The reaction is continued at 240°C under atmospheric pressure until about 95% of the theoretical amount of water is distilled and a transparent hydroxyl functionalised prepolymer with following characteristics is obtained:

AN = 7.6 mg KOH:g

OHN = 56.6 mg KOH/g

To the first step prepolymer standing at 200°C, 110.14 parts of isophthalic acid is added. Thereupon, the mixture is gradually heated to 230°C. After a 2 hour period at 230°C and when the reaction mixture is transparent, 1.0 part of tributylphosphite and 1.0 part of n-butyltintrioctoate are added and a vacuum of 50 mm Hg is gradually applied. After 3 hours at 230°C and 50 mm Hg, following characteristics are obtained:

AN = 35.5 mg KOH/g

OHN = 2.5 mg KOH/g

BrookField$^{200°C}$ (Cone/Plate) = 5000 mPa.s

The carboxyl functionalised polyester is cooled down to 180°C and the resin is discharged.

Example 9: Synthesis of a carboxylic acid group containing polyester (B).

A mixture of 375.2 parts of neopentyl glycol and 1.9 parts of n-butyltin trioctoate is placed in a conventional four-neck round bottom flask as in example 8.

The flask contents are heated while stirring, under nitrogen to a temperature of circa 140°C. Thereupon 483.3 parts of terephthalic acid along with 47.8 parts of adipic acid are added while stirring and the mixture is gradually heated to a temperature of 230°C. Distillation starts from about 185°C. After about 95% of the theoretical quantity of water is distilled and a transparent prepolymer is obtained, the mixture is cooled down to 200°C.

The hydroxyl functionalised prepolymer thus obtained, is characterised by:

AN = 8 mg KOH/g

OHN = 60 mg KOH/g

To the first step prepolymer standing at 200°C, 56.9 parts of trimellitic anhydride and 36.7 parts of adipic acid are added. Thereupon the mixture is gradually heated to 225°C. After a two-hour period at 225°C and when the reaction mixture is transparent, 0.8 parts of tributylphosphite are added and a vacuum of 50 mm Hg is gradually applied.

After 3 hours at 225°C and 50 mm Hg, following characteristics are obtained:

AN = 48 mg KOH/g

OHN = 6 mg KOH/g

Brookfield$^{175°C}$ = 8700 mPa.s

Example 10: Synthesis of a (cyclo)aliphatic semi-crystalline polyester (B')

A mixture of 532.1 parts of 1,4-cyclohexanedimethanol, 15.9 parts of trimethylolpropane, 591.3 parts of adipic acid and 2.5 parts of n-butyltintrioctoate is placed in a reactor as for Example 8. The flask contents are heated, while stirring under nitrogen to a temperature of circa 140°C, at which point water is distilled from the reactor. The heating is continued gradually to a temperature of 220°C. When distillation under atmospheric pressure stops, 1.0 part of tributylphosphite and 1.0 part of n-butyltintrioctoate are added and a vacuum of 50 mm Hg is gradually applied.

After 5 hours at 220°C and 50 mm Hg, the following characteristics are obtained:

| | |
|---|---|
| AN | 22 mg KOH/g |
| OHN | 3 mg KOH/g |
| Brookfield$^{200°C}$ (cone/plate) | 6800 mPa.s |
| Fusion zone | 79 - 96°C |

Example 11: The glycidyl group containing acrylic copolymers of example 1 to 3, the carboxylic acid group containing acrylic copolymers of example 4 to 7, the polyesters of example 8 to 10 along with an imidazole type catalyst (Epicure P1) are then formulated to a powder accordingly to one of the formulations as mentioned below.

| Formulation A White paint formulation | | Formulation B Brown paint formulation | |
|---|---|---|---|
| Binder | 69.06 | Binder | 78.33 |
| Kronos 2310 | 29.60 | Bayferrox 130 | 4.44 |
| Resiflow PV5 | 0.99 | Bayferrox 3950 | 13.80 |
| Benzoin | 0.35 | Carbon Black FW2 | 1.09 |
| Epicure P1 | 0.50 | Resiflow PV5 | 0.99 |
| | | Benzoin | 0.35 |
| | | Epicure P1 | 0.50 |

The powders are prepared first by dry blending of the different components and then by homogenisation in the melt using a PRISM 16 mm L/D 15/1 twin screw extruder at an extrusion temperature of 85°C. The homogenised mix is then cooled and grinded in an Alpine. Subsequently the powder is sieved to obtain a particle size between 10 and 110 $\mu$m. The powder thus obtained is deposited on chromated (Cr$^{6+}$) aluminium H5005, DIN 50939 with a thickness of 1 mm, by electrostatic deposition using the GEMA - Volstatic PCG 1 spray gun. At a film thickness between 50 and 80 $\mu$m the panels are transferred to an air-ventilated oven, where curing proceeds for 10 minutes at a temperature of 140°C and for 25 minutes at 120°C respectively. The paint characteristics for the finished coatings are given in the table hereafter.

| Formulation Number | Formulation Type | Glycidyl Acrylic | Carboxyl Acrylic | Carboxyl Polyester | Gloss | Visual | Pencil Hardness | MEK-rubs |
|---|---|---|---|---|---|---|---|---|
| Ex. 12 | A | Ex. 1: 12.0 | Ex. 4: 44.0 | Ex. 8: 4 4.0 | 7/8 | g/g | 2H/2H | >200/>200 |
| Ex. 13 | A | Ex. 2: 25.4 | Ex. 5:37.3 | Ex.9: 37.3 | 30/29 | g/g | 3H/3H | >200/>200 |
| Ex. 14 | A | Ex. 2: 20.0 | Ex. 5:20.0 | Ex. 8:60.0 | 10/10 | g/g | 3H/3H | >200/>200 |
| Ex. 15 | A | Ex. 2: 20.0 | Ex. 5:20.0 | Ex.8:54.0 Ex. 10: 6.0 | 8/9 | g/g | H/H | >200/>200 |
| Ex. 16 | B | Ex. 2: 20.0 | Ex. 5: 20.0 | Ex.8:54.0 Ex. 10: 6.0 | 10/10 | g/g | H/H | >200/>200 |
| Ex. 17 | A | Ex. 1: 12.0 | Ex. 6: 44.0 | Ex. 8: 4 4.0 | 10/9 | g/g | 3H/3H | >200/>200 |
| Ex. 18 | A | Ex. 3: 12.0 | Ex. 4: 44.0 | Ex. 8: 4 4.0 | 11/12 | g/g | 2H/3H | >200/>200 |
| Ex. 19 | A | Ex. 3: 12.0 | Ex. 6: 44.0 | Ex. 8: 4 4.0 | 5/5 | b-t/b-t | 3H/3H | >200/>200 |
| Ex. 20 | A | Ex. 1:22.8 | Ex. 7:38.6 | Ex. 8:38.6 | 8/8 | t-s/t-s | 3H/3H | >200/>200 |

In this table:

| | |
|---|---|
| Column 1: | indicates the identification number of the formulation |
| Column 2: | indicates the type of formulation |
| | A = white (RAL9010) |
| | B = medium brown (RAL8014) |
| Column 3: | indicates the type and quantity of the glycidyl group containing acrylic copolymer (A), or (A) and (A'), used in the binder |
| Column 4: | indicates the type and quantity of the carboxylic acid group containing acrylic copolymer (C), or (C) and (C'), used in the binder |
| Column 5: | indicates the type and quantity of the carboxylic acid group containing polyester (B), or (B) and (B'), used in the binder |
| Column 6: | indicates the 60° gloss, measured according to ASTM D523 (10' at 140°C/25' at 120°C) |
| Column 7: | indicates the aspect of the coating (10' at 140°C/ 25' at 120°C) |
| | G: very smooth |
| | B: strong orange peel |
| | T: textured |
| | S: sandpaper-like |
| Column 8: | indicates the pencil hardness according to the scratch Hardness Tester according to Wolff-Wilborn. (10' at 140°C/ 25' at 120°C) |
| Column 9: | indicates the resistance to MEK, which corresponds to the number of twofold rubbing movements (to and fro) with a cotton pad impregnated with MEK which does not detrimentally affect the appearance of the surface of the cured film. (10' at 140°C/ 25' at 120°C) |

As clearly appears from examples 12 to 18, smooth low gloss finishes can be obtained from the powder coating compositions according to the present invention.

On the contrary, powder coating compositions comprising a carboxylic acid group containing polyester along with a high Tg-low Mn carboxylic acid group containing acrylic copolymer and a high Tg-low Mn glycidyl group containing acrylic copolymer, upon application and curing, present low gloss coatings proving strong orange peel and/or a textured-sandpaper-like aspect.

Besides, the coatings according to the present invention all prove to satisfy an excellent outdoor resistance, comparable to or better than the currently used nowadays commercial available powders.

Thus, upon submitting the coating obtained from the powder of Ex.16 to the Q-UV accelerated weathering test, 2200 hours of exposure are needed for a reduction of the relative 60° gloss value (ASTM D523) to 50% of the initial value, meanwhile a ΔE*-value

$$\Delta E^* = \sqrt{(L_0^* - L^*)^2 + (a_0^* - a^*)^2 + (b_0^* - b^*)^2}$$

(according to "Compagnie Internationale d'Eclairage" L*a*b*-colour measurement method (CIE-L*a*b*)) of 4 is measured after 1500 hrs of exposure.

Weathering measurements are conducted in a very severe environment, i.e. the Q-UV accelerated weathering tester (Q-Panel Co) according to ASTM G53-88 (standard practice for operating light and water exposure apparatus - fluorescent UV/condensation type - for exposure of non metallic materials).

For these measurements, coated panels are subjected to the intermittent effects of condensation (4 hours at 50°C) as well as the damaging effects of sunlight simulated by fluorescent UV-A lamps (340 nm, I = 0.77 W/m$^2$/nm) (8 hours at 60°C).

**Claims**

1. Thermosetting powder coating composition comprising a co-reactable blend of

    (i) 5 to 50 weight percent of at least one of glycidyl group containing acrylic copolymer chosen between glycidyl group containing acrylic copolymers (A) having a glass transition temperature in the range of from +45 to +100°C and a number average molecular weight in the range of from 2000 to 5000, glycidyl group containing acrylic copolymers (A') having a glass transition temperature in the range of from -50 to +40°C, and their mixtures;

(ii) 5 to 90 weight percent of at least one carboxylic acid group containing polyester chosen between carboxylic acid group containing polyesters (B) having an acid number in the range of from 15 to 100 mg KOH/g and a glass transition temperature in the range of from +45 to +100°C, carboxylic acid group containing polyesters (B') having an acid number in the range of from 15 to 100 mg KOH/g and a glass transition temperature of from -50 to +40°C, and their mixtures;

(iii) 5 to 50 weight percent of at least one carboxylic acid group containing acrylic copolymer chosen between carboxylic acid group containing acrylic copolymers (C) having a glass transition temperature in the range of from +45 to +100°C, an acid number of from 10 to 90 mg KOH/g and a number average molecular weight in the range of from 2000 to 5000, carboxylic acid group containing acrylic copolymers (C') having a glass transition temperature in the range of from -50 to +40°C, an acid number of from 10 to 90 mg KOH/g, and their mixtures; the weight percentages being calculated on the whole of the components (A), (A'), (B), (B'), (C) and (C'); and

(iv) a thermosetting catalyst (D)

provided that at least one of the low glass transition temperature polymers (A'), (B') and (C') is present in the composition.

2. Composition according to claim 1 wherein the glycidyl group containing acrylic copolymers (A) and (A') have an epoxy equivalent weight of from 1.0 to 10.0 and preferably 1.5 to 5.0 milli-equivalents of epoxy per gram of acrylic copolymer.

3. Composition according to claim 1 or 2, wherein the glycidyl group containing acrylic copolymers (A) and (A') are prepared from 1 to 95 % mole of at least one glycidyl group containing (meth)acrylic monomer selected from glycidyl acrylate, glycidyl methacrylate, methyl glycidyl methacrylate, methyl glycidyl acrylate, 3,4-epoxycyclohexylmethyl (meth)acrylate, 1,2-etyleneglycol glycidylether (meth)acrylate, 1,3-propyleneglycolglycidylether(meth)acrylate, 1,4-butyleneglycolether (meth)acrylate, 1,6-hexanediolether(meth)acrylate, 1,3-(2-ethyl-2-butyl)-propanediolglycidylether(meth)acrylate and acrylic glycidyl ether and 99 to 5 % mole of one or more monomers selected from methyl (meth)acrylate, ethyl(meth)acrylate, propyl(meth)acrylate, n-butyl(meth)acrylate, isobutyl(meth)acrylate, tert.butyl (meth)acrylate, 2-ethylhexyl(meth)acrylate, stearyl(meth)acrylate, tridecyl (meth)acrylate, cyclohexyl(meth)acrylate, n-hexyl(meth)acrylate, benzyl(meth)acrylate, phenyl(meth)acrylate, isobornyl(meth)acrylate, nonyl(meth)acrylate, hydroxyethyl(meth) acrylate, hydroxypropyl(meth)acrylate, hydroxybutyl(meth)acrylate, 1,4-butandiolmono (meth) acrylate, the esters of methacrylic acid, maleic acid, maleic anhydride, itaconic acid, dimethylaminoethyl(meth) acrylate, diethylaminoethyl(meth)acrylate, styrene, $\alpha$-methylstyrene, vinyltoluene, (meth)acrylonitrile, vinylacetate, vinylpropionate, acrylamide, methacrylamide, methylol(meth)acrylamide, vinylchloride, ethylene, propylene, C4-20 olefins and $\alpha$-olefins .

4. Composition according to any of claims 1 to 3, wherein the carboxylic acid group containing acrylic copolymers (C) and (C') are prepared from : 1 to 95 % mole of at least one of acrylic acid, methacrylic acid, crotonic acid, itaconic acid, fumaric acid, maleic acid, citraconic acid or the monoalkylesters of unsaturated dicarboxylic acids and 99 to 5 % mole of one or more monomers selected from methyl(meth)acrylate, ethyl(meth)acrylate, propyl(meth)acrylate, n-butyl(meth)acrylate, isobutyl(meth)acrylate, tert.butyl(meth)acrylate, 2-ethylhexyl(meth)acrylate, stearyl(meth) acrylate, tridecyl(meth) acrylate, cyclohexyl(meth)acrylate, n-hexyl(meth)acrylate, benzyl(meth)acrylate, phenyl (meth)acrylate, isobornyl(meth)acrylate, nonyl(meth)acrylate, hydroxyethyl(meth) acrylate, hydroxypropyl(meth) acrylate, hydroxybutyl(meth)acrylate, 1,4-butandiol mono (meth)acrylate, the esters of methacrylic acid, maleic acid, maleic anhydride, itaconic acid, dimethylaminoethyl(meth)acrylate, diethylaminoethyl(meth)acrylate, styrene, $\alpha$-methylstyrene, vinyltoluene, (meth)acrylonitrile, vinylacetate, vinylpropionate, acrylamide, methacrylamide, methylol (meth)acrylamide, vinylchloride, ethylene, propylene, C4-20 olefins and $\alpha$-olefins.

5. Composition according to any of claims 1 to 4 wherein the carboxylic acid group containing polyester (B) is amorphous and has:

- an acid number from 15 to 100 mg KOH/g and preferably from 30 to 70 mg KOH/g.
- number averaged molecular weight ranging from 1100 to 15000 and preferably from 1600 to 8500, measured by gel permeation chromatography (GPC)
- an ICI cone and plate viscosity according to ASTM D4287-88, measured at 200°C ranging from 5 to 15000 mPa.s.

6. Composition according to any of claims 1 to 5 wherein the carboxylic acid group containing polyester (B') is semi-crystalline and has:

- an acid number from 15 to 100 mg KOH/g and preferably from 30 to 70 mg KOH/g
- a number averaged molecular weight ranging from 1100 to 17000 and preferably from 1400 to 11200
- a fusion zone from 50 to 150°C, measured by Differential Scanning Calorimetry (DSC) according to ASTM D3418 with a heating gradient of 20°C per minute
- a glass transition temperature (Tg) from -50 to 40°C, measured by Differential Scanning Calorimetry (DSC) according to ASTM D3418 with a heating gradient of 20°C per minute
- a degree of crystallinity, measured by Differential Scanning Calorimetry (DSC) according to ASTM D3415 of at least 5 J/g and preferably at least 10 J/g
- an ICI (cone/plate) viscosity according to ASTM D4287-88, measured at 100°C of at least 100 mPa.s.

7. Composition according to any of claims 1 to 6 wherein the carboxylic acid group containing amorphous polyester (B) is obtained of from 50 to 100% mole of terephthalic acid or isophthalic acid or their mixtures and from 0 to 50% mole of at least one aliphatic, cycloaliphatic or aromatic polyacid different from terephthalic acid or isophthalic acid, referring to the polyacid constituents, and from 40 to 100% mole of neopentyl glycol and from 0 to 60% mole of at least one other aliphatic and/or cycloaliphatic polyol, referring to the polyol constituents.

8. Composition according to any of claims 1 to 7 wherein the carboxylic acid group containing semi-crystalline polyester (B') is obtained of from 70 to 100% mole of terephthalic acid, 1,4-cyclohexanedicarboxylic acid and/or a linear chain dicarboxylic acid containing 4 to 16 carbon atoms and from 0 to 30% mole of at least one other aromatic, aliphatic or cycloaliphatic polyacid, referring to the polyacid constituents, and from 70 to 100% mole of at least one cycloaliphatic or linear chain aliphatic diol containing 2 to 16 carbon atoms and from 0 to 30% mole of at least one other aliphatic polyol, referring to the polyol constituents.

9. Composition according to any of claims 1 to 8 wherein the carboxylic acid group containing amorphous and/or semi-crystalline polyester is linear or branched and/or comprises polyanhydride end-capped groups.

10. Composition according to any of claims 1 to 9 wherein the thermosetting catalyst (D) is an amine, phosphine, ammonium salt, phosphonium salt, acid blocked amine or acid blocked phosphine containing compound and is present in an amount of from 0,1 to 5 weight percent with respect to the weight of the total weight of (A), (A'), (B), (B'), (C) and (C').

11. Thermosetting powder coating composition according to any of claims 1 to 10, containing at least one additive chosen from UV-light absorbers and/or hindered amine light stabilisers, flow control agents and degassing agents.

12. Thermosetting powder coating composition of claim 11 for use as a clear lacquer.

13. Thermosetting powder coating composition of claim 11 containing pigments, dyes, fillers.

14. Process for obtaining a low gloss coating on an article, wherein a thermosetting powder coating composition according to any one of claims 1 to 13 is applied to the said article by an electrostatic or friction charging spray gun, or by the fluidised bed technique, and in that the article thus coated is cured at a temperature of from 80 to 150°C.

15. Use of a thermosetting powder coating composition according to any one of claims 1 to 13 to coat metallic and non-metallic surfaces.

16. Use of a thermosetting powder coating composition according to any one of claims 1 to 13 to coat an heat sensitive substrates such as paper, card board, wood, fibre board, textiles, polycarbonates, poly (meth)acrylates, polyolefins, polystyrenes, polyvinylchlorides, polyesters, polyurethanes, polyamides, copolymers of acrylonitrile butadiene styrene and cellulose acetate butyrate.

17. Entirely or partially coated substrate using the process of claim 14.

**Patentansprüche**

1. Hitzehärtbare Pulverbeschichtungszusammensetzung, umfassend eine co-reaktive Mischung aus

(i) 5 bis 50 Gewichtsprozent mindestens eines Glycidylgruppen-enthaltenden Acrylcopolymers, ausgewählt zwischen Glycidylgruppen-enthaltenden Acrylcopolymeren (A) mit einer Glasübergangstemperatur im Bereich von +45 bis +100 °C und einem zahlenmittleren Molekulargewicht im Bereich von 2.000 bis 5.000, Glycidylgruppen-enthaltenden Acrylcopolymeren (A') mit einer Glasübergangstemperatur im Bereich von -50 bis +40 °C und deren Gemischen;

(ii) 5 bis 90 Gewichtsprozent mindestens eines Carbonsäuregruppen-enthaltenden Polyesters, ausgewählt zwischen Carbonsäuregruppen-enthaltenden Polyestern (B) mit einer Säurezahl im Bereich von 15 bis 100 mg KOH/g und einer Glasübergangstemperatur im Bereich von +45 bis +100 °C, Carbonsäuregruppen-enthaltenden Polyestern (B') mit einer Säurezahl im Bereich von 15 bis 100 mg KOH/g und einer Glasübergangstemperatur von -50 bis +40 °C und deren Gemischen;

(iii) 5 bis 50 Gewichtsprozent mindestens eines Carbonsäuregruppen-enthaltenden Acrylcopolymers, ausgewählt zwischen Carbonsäuregruppen-enthaltenden Acrylcopolymeren (C) mit einer Glasübergangstemperatur im Bereich von +45 bis +100 °C, einer Säurezahl von 10 bis 90 mg KOH/g und einem zahlenmittleren Molekulargewicht im Bereich von 2.000 bis 5.000, Carbonsäuregruppen-enthaltenden Acrylcopolymeren (C') mit einer Glasübergangstemperatur im Bereich von -50 bis +40 °C, einer Säurezahl von 10 bis 90 mg KOH/g und deren Gemischen;

wobei die Gewichtsprozentanteile aus der Gesamtheit der Komponenten (A), (A'), (B), (B'), (C) und (C') berechnet werden; und

(iv) einem hitzehärtbaren Katalysator (D),

mit der Maßgabe, daß mindestens eines der Polymer (A'), (B') und (C') mit niedriger Glasübergangstemperatur in der Zusammensetzung vorliegt.

2. Zusammensetzung nach Anspruch 1, wobei die Glycidylgruppen-enthaltenden Acrylcopolymere (A) und (A') ein Epoxyäquivalentgewicht von 1,0 bis 10,0 und vorzugsweise 1,5 bis 5,0 Milli-Äquivalenten Epoxy pro Gramm Acrylcopolymer haben.

3. Zusammensetzung nach Anspruch 1 oder 2, wobei die Glycidylgruppen-enthaltenden Acrylcopolymere (A) und (A') aus 1 bis 95 mol-% mindestens eines Glycidylgruppen-enthaltenden (Meth)acrylmonomers, ausgewählt aus Glycidylacrylat, Glycidylmethacrylat, Methylglycidylmethacrylat, Methylglycidylacrylat, 3,4-Epoxycyclohexylmethyl(meth)acrylat, 1,2-Ethylenglycolglycidylether(meth)acrylat, 1,3-Propylenglycolglycidylether(meth)acrylat, 1,4-Butylenglycolether(meth)acrylat, 1,6-Hexandiolether(meth)acrylat, 1,3-(2-Ethyl-2-butyl)-propandiolglycidylether(meth)acrylat und Acrylglycidylether, und 99 bis 5 mol-% eines oder mehrerer Monomere, ausgewählt aus Methyl(meth)acrylat, Ethyl(meth)acrylat, Propyl(meth)-acrylat, n-Butyl(meth)acrylat, Isobutyl(meth)acrylat, tert.-Butyl(meth)acrylat, 2-Ethylhexyl-(meth)acrylat, Stearyl(meth)acrylat, Tridecyl(meth)acrylat, Cyclohexyl(meth)acrylat, n-Hexyl(meth)acrylat, Benzyl(meth)acrylat, Phenyl(meth)acrylat, Isobornyl(meth)acrylat, Nonyl(meth)acrylat, Hydroxyethyl(meth)acrylat, Hydroxypropyl(meth)acrylat, Hydroxybutyl(meth)acrylat, 1,4-Butandiolmono(meth)acrylat, den Estern von Methacrylsäure, Maleinsäure, Maleinsäureanhydrid, Itaconsäure, Dimethylaminoethyl(meth)acrylat, Diethylaminoethyl(meth)acrylat, Styrol, $\alpha$-Methylstyrol, Vinyltoluol, (Meth)acrylnitril, Vinylacetat, Vinylpropionat, Acrylamid, Methacrylamid, Methylol(meth)acrylamid, Vinylchlorid, Ethylen, Propylen, $C_{4-20}$-Olefinen und $\alpha$-Olefinen, hergestellt werden.

4. Zusammensetzung nach einem der Ansprüche 1 bis 3, wobei die Carbonsäuregruppen-enthaltenden Acrylcopolymere (C) und (C') aus: 1 bis 95 mol-% von mindestens einem von Acrylsäure, Methacrylsäure, Crotonsäure, Itaconsäure, Fumarsäure, Maleinsäure, Citraconsäure oder den Monoalkylestern ungesättigter Dicarbonsäuren und 99 bis 5 mol-% eines oder mehrerer Monomere, ausgewählt aus Methyl-(meth)acrylat, Ethyl(meth)acrylat, Propyl(meth)acrylat, n-Butyl(meth)acrylat, Isobutyl-(meth)acrylat, tert.-Butyl(meth)acrylat, 2-Ethylhexyl(meth)acrylat, Stearyl(meth)acrylat, Tridecyl(meth)acrylat, Cyclohexyl(meth)acrylat, n-Hexyl(meth)acrylat, Benzyl(meth)acrylat, Phenyl(meth)acrylat, Isobornyl(meth)acrylat, Nonyl(meth)acrylat, Hydroxyethyl(meth)acrylat, Hydroxypropyl(meth)acrylat, Hydroxybutyl(meth)acrylat, 1,4-Butandiolmono(meth)-acrylat, den Estern von Methacrylsäure, Maleinsäure, Maleinsäureanhydrid, Itaconsäure, Dimethylaminoethyl(meth)acrylat, Diethylaminoethyl(meth)acrylat, Styrol, $\alpha$-Methylstyrol, Vinyltoluol, (Meth)acrylnitril, Vinylacetat, Vinylpropionat, Acrylamid, Methacrylamid, Methylol(meth)acrylamid, Vinylchlorid, Ethylen, Propylen, $C_{4-20}$-Olefinen und $\alpha$-Olefinen, hergestellt werden.

5. Zusammensetzung nach einem der Ansprüche 1 bis 4, wobei der Carbonsäuregruppen-enthaltende Polyester (B) amorph ist und:

- eine Säurezahl von 15 bis 100 mg KOH/g und vorzugsweise von 30 bis 70 mg KOH/g,
- ein zahlenmittleres Molekulargewicht im Bereich von 1.100 bis 15.000 und vorzugsweise von 1.600 bis 8.500, gemessen durch Gelpermeationschromatographie (GPC),
- eine ICI-Konus-Platte-Viskosität gemäß ASTM D4287-88, gemessen bei 200 °C, im Bereich von 5 bis 15.000 mPa.s hat.

6. Zusammensetzung nach einem der Ansprüche 1 bis 5, wobei der Carbonsäuregruppenenthaltende Polyester (B') halbkristallin ist und:

- eine Säurezahl von 15 bis 100 mg KOH/g und vorzugsweise von 30 bis 70 mg KOH/g,
- ein zahlenmittleres Molekulargewicht von 1.100 bis 17.000 und vorzugsweise von 1.400 bis 11.200,
- eine Schmelzzone von 50 bis 150 °C, gemessen durch Differentialscanningkalorimetrie (DSC) gemäß ASTM D3418, bei einem Heizgradienten von 20 °C pro Minute,
- eine Glasübergangstemperatur (Tg) von -50 bis 40 °C, gemessen durch Differentialscanningkalorimetrie (DSC) gemäß ASTM D3418, bei einem Heizgradienten von 20 °C pro Minute,
- einen Kristallinitätsgrad, gemessen durch Differentialscanningkalorimetrie (DSC) gemäß ASTM D3415, von mindestens 5 J/g und vorzugsweise mindestens 10 J/g,
- eine ICI- (Konus/Platte) Viskosität gemäß ASTM D4287-88, gemessen bei 100 °C, von mindestens 100 mPa · s hat.

7. Zusammensetzung nach einem der Ansprüche 1 bis 6, wobei der Carbonsäuregruppen-enthaltende amorphe Polyester (B) aus 50 bis 100 mol-% Terephthalsäure oder Isophthalsäure oder deren Gemischen und aus 0 bis 50 mol-% mindestens einer aliphatischen, cycloaliphatischen oder aromatischen mehrwertigen Säure, die sich von Terephthalsäure oder Isophthalsäure in bezug auf die Bestandteile der mehrwertigen Säure unterscheidet, und aus 40 bis 100 mol-% Neopentylglycol und aus 0 bis 60 mol-% mindestens eines anderen aliphatischen und/oder cycloaliphatischen Polyols, in bezug auf die Polyolbestandteile, erhalten wird.

8. Zusammensetzung nach einem der Ansprüche 1 bis 7, wobei der Carbonsäuregruppenenthaltende halbkristalline Polyester (B') aus 70 bis 100 mol-% Terephthalsäure, 1,4-Cyclohexandicarbonsäure und/oder einer geradkettigen Dicarbonsäure, enthaltend 4 bis 16 Kohlenstoffatome, und aus 0 bis 30 mol-% mindestens einer anderen aromatischen, aliphatischen oder cycloaliphatischen mehrwertigen Säure, in bezug auf die Bestandteile der mehrwertigen Säure, und aus 70 bis 100 mol-% mindestens eines cycloaliphatischen oder geradkettigen aliphatischen Diols, enthaltend 2 bis 16 Kohlenstoffatome, und aus 0 bis 30 mol-% mindestens eines anderen aliphatischen Polyols, in bezug auf die Polyolbestandteile, erhalten wird.

9. Zusammensetzung nach einem der Ansprüche 1 bis 8, wobei der Carbonsäuregruppenenthaltende amorphe und/oder halbkristalline Polyester linear oder verzweigt ist und/oder Polyanhydrid-endgruppengeschützte Gruppen umfaßt.

10. Zusammensetzung nach einem der Ansprüche 1 bis 9, wobei der hitzehärtbare Katalysator (D) eine Amin-, Phosphin-, Ammoniumsalz-, Phosphoniumsalz-, mit Säure blockierte Amin- oder mit Säure blockierte Phosphin-enthaltende Verbindung ist und in einer Menge von 0,1 bis 5 Gewichtsprozent, bezogen auf das Gewicht des Gesamtgewichtes von (A), (A'), (B), (B'), (C) und (C'), vorliegt.

11. Hitzehärtbare Pulverbeschichtungszusammensetzung nach einem der Ansprüche 1 bis 10, enthaltend mindestens ein Additiv, ausgewählt aus UV-Lichtabsorbern und/oder Lichtstabilisatoren auf Basis gehinderter Amine, Fließkontrollmitteln und Entgasungsmitteln.

12. Hitzehärtbare Pulverbeschichtungszusammensetzung nach Anspruch 11 zur Verwendung als Klarlack.

13. Hitzehärtbare Pulverbeschichtungszusammensetzung nach Anspruch 11, enthaltend Pigmente, Farbstoffe, Füllstoffe.

14. Verfahren für den Erhalt einer Beschichtung mit geringem Glanz auf einem Gegenstand, wobei eine hitzehärtbare Pulverbeschichtungszusammensetzung nach einem der Ansprüche 1 bis 13 auf den Gegenstand durch eine Spritzpistole mit elektrostatischer oder Reibungsladung oder durch das Fließbettverfahren aufgebracht wird und der so beschichtete Gegenstand bei einer Temperatur von 80 bis 150°C gehärtet wird.

15. Verwendung einer hitzehärtbaren Pulverbeschichtungszusammensetzung nach einem der Ansprüche 1 bis 13 für die Beschichtung metallischer und nicht metallischer Oberflächen.

16. Verwendung einer hitzehärtbaren Pulverbeschichtungszusammensetzung nach einem der Ansprüche 1 bis 13 für die Beschichtung wärmeempfindlicher Substrate wie Papier, Karton, Holz, Pappe, Textilen, Polycarbonate, Poly (meth)acrylate, Polyolefine, Polystyrole, Polyvinylchloride, Polyester, Polyurethane, Polyamide, Copolymere von Acrylnitrilbutadienstyrol und Celluloseacetatbutyrat.

**17.** Unter Verwendung des Verfahrens von Anspruch 14 vollständig oder teilweise beschichtetes Substrat.

**Revendications**

**1.** Composition de revêtement en poudre thermodurcissable comprenant un mélange pouvant coréagir de

(i) 5 à 50 pourcent en poids d'au moins un copolymère acrylique contenant un groupe glycidyle choisi parmi les copolymères (A) acryliques contenant un groupe glycidyle ayant un point de transition à l'état vitreux compris entre +45 et +100°C et une masse moléculaire moyenne en nombre comprise entre 2000 et 5000, des copolymères (A') acryliques contenant un groupe glycidyle ayant un point de transition à l'état vitreux compris entre -50 et+40°C, et leurs mélanges ;
(ii) 5 à 90 pourcent en poids d'au moins un polyester contenant un groupe acide carboxylique choisi parmi des polyesters (B) contenant un groupe acide carboxylique, ayant un indice d'acide compris entre 15 et 100 mg de KOH/g et un point de transition à l'état vitreux compris entre +45 et +100°C, des polyesters (B') contenant un groupe acide carboxylique, ayant un indice d'acide compris entre 15 et 100 mg de KOH/g et un point de transition à l'état vitreux compris entre -50 et +40°C, et leurs mélanges ;
(iii) 5 à 50 pourcent en poids d'au moins un copolymère acrylique contenant un groupe acide carboxylique choisi parmi des copolymères (C) acryliques contenant un groupe acide carboxylique ayant un point de transition à l'état vitreux compris entre + 45 et + 100°C, un indice d'acide compris entre 10 et 90 mg de KOH/g et une masse moléculaire moyenne en nombre comprise entre 2000 et 5000, des copolymères (C') acryliques contenant un groupe acide carboxylique ayant un point de transition à l'état vitreux compris entre -50 et +40°C, un indice d'acide compris entre 10 et 90 mg de KOH/g, et leurs mélanges ;
les pourcentages en poids étant calculés sur l'ensemble des constituants (A), (A'), (B), (B'), (C) et (C') ; et
(iv) un catalyseur (D) de thermodurcissement
pourvu qu'au moins l'un des polymères (A'), (B') et (C') à bas point de transition à l'état vitreux soit présent dans la composition.

**2.** Composition suivant la revendication 1, dans laquelle les copolymères (A) et (A') acryliques contenant un groupe glycidyle ont un poids équivalent d'époxy compris entre 1,0 et 10,0 et, de préférence, de 1,5 à 5,0 milliéquivalents d'époxy par gramme de copolymère acrylique.

**3.** Composition suivant la revendication 1 ou 2, dans laquelle les copolymères (A) et (A') acryliques contenant un groupe glycidyle sont préparés à partir de 1 à 95 % en moles d'au moins un monomère (méth)acrylique contenant un groupe glycidyle choisi parmi l'acrylate de glycidyle, le méthacrylate de glycidyle, le méthacrylate de méthyl glycidyle, l'acrylate de méthyl glycidyle, le (méth)acrylate de 3,4-époxycyclohexylméthyle, le (méth)acrylate de 1,2-éthylèneglycol glycidyléther, le (méth)acrylate de 1,3-propylèneglycol glycidyléther, le (méth)acrylate de 1,4-butylèneglycoléther, le (méth)acrylate de 1,6-hexanedioléther, le (méth)acrylate de 1,3-(2-éthyl-2-butyl)propanediol glycidyléther et l'éther de glycidyle acrylique, et de 99 à 5 % en moles d'un ou de plusieurs monomères choisis parmi le (méth)acrylate de méthyle, le (méth)acrylate d'éthyle, le (méth)acrylate de propyle, le (méth)acrylate de n-butyle, le méth)acrylate d'isobutyle, le (méth)acrylate de tert-butyle, le (méth)acrylate de 2-éthylhexyle, le (méth) acrylate de stéaryle, le (méth)acrylate de tridécyle, le (méth)acrylate de cyclohexyle, le (méth)acrylate de n-hexyle, le (méth)acrylate de benzyle, le (méth)acrylate de phényle, le (méth)acrylate d'isobornyle, le (méth)acrylate de nonyle, le (méth)acrylate d'hydroxyéthyle, le (méth)acrylate d'hydroxypropyle, le (méth)acrylate d'hydroxybutyle, le mono(méth)acrylate de 1,4-butanediol, les esters de l'acide méthacrylique, l'acide maléique, l'anhydride maléique, l'acide itaconique, le (méth)acrylate de diméthylaminoéthyle, le (méth)acrylate de diéthylaminoéthyle, le styrène, l'α-méthylstyrène, le vinyltoluène, le (méth)acrylonitrile, l'acétate de vinyle, le propionate de vinyle, l'acrylamide, le méthacrylamide, le méthylol(méth)acrylamide, le chlorure de vinyle, l'éthylène, le propylène, les oléfines ayant de 4 à 20 atomes de carbone et les α-oléfines.

**4.** Composition suivant l'une quelconque des revendications 1 à 3, dans laquelle les copolymères (C) et (C') acryliques contenant un groupe acide carboxylique sont préparés à partir :

de 1 à 95 % en moles d'au moins l'un de l'acide acrylique, de l'acide méthacrylique, de l'acide crotonique, de l'acide itaconique, de l'acide fumarique, de l'acide maléique, de l'acide citraconique ou des esters monoalcoyliques d'acides dicarboxyliques insaturés et de 99 à 5 % en moles d'un ou de plusieurs monomères choisis parmi le (méth)acrylate de méthyle, le (méth)acrylate d'éthyle, le (méth)acrylate de propyle, le (méth)acrylate de n-butyle, le méth)acrylate d'isobutyle, le (méth)acrylate de tert-butyle, le (méth)acrylate de 2-éthylhexyle, le (méth)acrylate de stéaryle, le (méth)acrylate de tridécyle, le (méth)acrylate de cyclohexyle, le (méth)acrylate de n-hexyle, le (méth)acrylate de benzyle, le (méth)acrylate de phényle, le (méth)acrylate d'isobornyle, le (méth) acrylate de nonyle, le (méth)acrylate d'hydroxyéthyle, le (méth)acrylate d'hydroxypropyle, le (méth)acrylate d'hydroxybutyle, le mono(méth)acrylate de 1,4-butanediol, les esters de l'acide méthacrylique, l'acide maléique, l'anhydride maléique, l'acide itaconique, le (méth)acrylate de diméthylaminoéthyle, le (méth)acrylate de diéthylaminoéthyle, le styrène, l'α-méthylstyrène, le vinyltoluène, le (méth)acrylonitrile, l'acétate de vinyle, le propionate de vinyle, l'acrylamide, le méthacrylamide, le méthylol(méth)acrylamide, le chlorure de vinyle, l'éthylène, le propylène, les oléfines ayant de 4 à 20 atomes de carbone et les α-oléfines.

5. Composition suivant l'une quelconque des revendications 1 à 4, dans laquelle le polyester (B) contenant un groupe acide carboxylique est amorphe et a :

   - un indice d'acide compris entre 15 et 100 mg de KOH/g, de préférence compris entre 30 et 70 mg de KOH/g,
   - une masse moléculaire moyenne en nombre comprise entre 1100 et 15 000 et, de préférence, entre 1600 et 8500, mesurée par chromatographie par perméation de gel (GPC),
   - une viscosité ICI cône et plaque suivant ASTM D4287-88, mesurée à 200°C, comprise entre 5 et 15 000 mPa.s.

6. Composition suivant l'une quelconque des revendications 1 à 5, dans laquelle le polyester (B') contenant un groupe acide carboxylique est semi-cristallin et a :

   - un indice d'acide compris entre 15 et 100 mg de KOH/g, de préférence entre 30 et 70 mg de KOH/g
   - une masse moléculaire moyenne en nombre comprise entre 1100 et 17 000 et, de préférence, entre 1400 et 11 200
   - une zone de fusion comprise entre 50 et 150°C, mesurée par analyse calorimétrique différentielle (DSC) suivant ASTM D3418 en ayant un gradient de chauffage de 20°C à la minute
   - une température (Tg) de transition à l'état vitreux comprise entre -50 et 40°C, mesurée par analyse calorimétrique différentielle (DSC) suivant ASTM D3418 en ayant un gradient de chauffage de 20°C à la minute
   - un degré de cristallinité, mesuré par analyse calorimétrique différentielle (DSC) suivant ASTM D3415, d'au moins 5 J/g et, de préférence, d'au moins 10 J/g
   - une viscosité ICI (cône/plaque) suivant ASTM D4287-88, mesurée à 100°C, d'au moins 100 mPa.s.

7. Composition suivant l'une quelconque des revendications 1 à 6, dans laquelle le polyester (B) amorphe contenant un groupe acide carboxylique est obtenu à partir de 50 à 100 % en moles d'acide téréphtalique ou d'acide isophtalique ou de leurs mélanges, et à partir de 0 à 50 % en moles d'au moins un polyacide aliphatique, cycloaliphatique ou aromatique différent de l'acide téréphtalique ou de l'acide isophtalique, en se référant aux constituants polyacides, et de 40 à 100 % en moles de néopentyl glycol et de 0 à 60 % en moles d'au moins un autre polyol aliphatique et/ou cycloaliphatique, en se référant aux constituants polyol.

8. Composition suivant l'une quelconque des revendications 1 à 7, dans laquelle le polyester (B') semi-cristallin contenant le groupe acide carboxylique est obtenu à partir de 70 à 100 % en moles d'acide téréphtalique, d'acide 1,4-cyclohexanedicarboxylique et/ou d'un acide dicarboxylique à chaîne linéaire contenant de 4 à 16 atomes de carbone, et à partir de 0 à 30 % en moles d'au moins un autre polyacide aromatique, aliphatique ou cycloaliphatique, en se référant aux constituants polyacides, et à partir de 70 à 100 % en moles d'au moins un diol cycloaliphatique ou aliphatique à chaîne linéaire contenant de 2 à 16 atomes de carbone, et à partir de 0 à 30 % en moles d'au moins un autre polyol aliphatique, en se référant aux constituants polyol.

9. Composition suivant l'une quelconque des revendications 1 à 8, dans laquelle le polyester amorphe et/ou semi-cristallin contenant un groupe acide carboxylique est linéaire ou ramifié et/ou comprend des groupes polyanhydrides protégés à l'extrémité.

10. Composition suivant l'une quelconque des revendications 1 à 9, dans laquelle le catalyseur (D) de thermodurcissement est une amine, une phosphine, un sel d'ammonium, un sel de phosphonium, un composé contenant une amine acide protégée ou une phosphine acide protégée et est présent en une quantité représentant de 0,1 à 5 pourcent du poids total de (A), (A'), (B), (B'), (C) et (C').

**11.** Composition de revêtement en poudre thermodurcissable suivant l'une quelconque des revendications 1 à 10, contenant au moins un additif choisi parmi des agents d'absorption de la lumière UV et/ou des agents de stabilisation à la lumière à base d'amine à empêchement stérique, des agents de réglage de la fluidité et des agents de dégazage.

**12.** Composition de revêtement en poudre thermodurcissable suivant la revendication 11, à utiliser en tant que vernis limpide.

**13.** Composition de revêtement en poudre thermodurcissable suivant la revendication 11, contenant des pigments, des colorants, des charges.

**14.** Procédé pour obtenir un revêtement brillant peu sur un article dans lequel on applique une composition de revêtement en poudre thermodurcissable suivant l'une quelconque des revendications 1 à 13 à l'article par un pistolet de projection électrostatique ou à charge par frottement, ou par la technique du lit fluidisé, et en ce qu'on durcit à une température de 80 à 150°C l'article ainsi revêtu.

**15.** Utilisation d'une composition de revêtement en poudre thermodurcissable suivant l'une quelconque des revendications 1 à 13 pour revêtir des surfaces métalliques et non métalliques.

**16.** Utilisation d'une composition de revêtement en poudre thermodurcissable suivant l'une quelconque des revendications 1 à 13 pour revêtir des substrats sensibles à la chaleur, tels que du papier, du carton, du bois, un panneau de fibres, des matières textiles, des polycarbonates, des poly(méth)acrylates, des polyoléfines, des polystyrènes, des poly(chlorure de vinyle), des polyesters, des polyuréthanes, des polyamides, des copolymères d'acrylonitrile de butadiène et de styrène et des acétates butyrate de cellulose.

**17.** Substrat revêtu en tout ou partie en utilisant le procédé de la revendication 14.

**EP 1 563 017 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0192367 A
- EP 504732 A
- US 6294610 B
- US 6407181 B
- JP 57205458 A